# EUROPÄISCHE PATENTSCHRIFT

(11) **EP 1 797 129 B1**
(45) Veröffentlichungstag und Bekanntmachung des Hinweises auf die Patenterteilung: **23.07.2008**
(21) Anmeldenummer: 05787251.7
(22) Anmeldetag: 20.09.2005
(51) Int. Cl.: C08G 18/10, C08G 18/76, C08G 18/48, C08G 65/26

(54) **VERFAHREN ZUR HERSTELLUNG VON POLYURETHAN-WEICHSCHAUMSTOFFEN**
METHOD FOR PRODUCING FLEXIBLE POLYURETHANE FOAMS
PROCEDE POUR PRODUIRE DES MOUSSES SOUPLES DE POLYURETHANE

(30) Priorität: 28.09.2004 DE 102004047524
(43) Veröffentlichungstag der Anmeldung: 20.06.2007
(73) Patentinhaber: BASF SE, 67056 Ludwigshafen (DE)
(72) Erfinder: HARRE, Kathrin, 01109 Dresden (DE); ROTERMUND, Inge, 01990 Ortrand (DE); RUPPEL, Raimund, 01099 Dresden (DE); ELING, Berend, 49448 Lemförde (DE)
(86) Internationale Anmeldenummer: PCT/EP2005/010124
(87) Internationale Veröffentlichungsnummer: WO 2006/034800

(56) Entgegenhaltungen:
- WO-A-00/78837
- WO-A-20/04105944
- WO-A-20/04111107
- US-A- 5 235 114

## Beschreibung

Gegenstand der Erfindung ist ein Verfahren zur Herstellung von Polyurethan-Weichschaumstoffen, insbesondere Polyurethan-Formweichschaumstoffen, durch Umsetzung von Polyetheralkoholen, die durch Anlagerung von Alkylenoxiden an H-funktionelle Startsubstanzen unter Verwendung von DMC-Katalysatoren hergestellt wurden, mit Polyisocyanaten.

Polyurethan-Weichschaumstoffe sind seit langem bekannt. Ihre Herstellung erfolgt üblicherweise durch Umsetzung von Polyisocyanaten mit Verbindungen mit mindestens zwei mit Isoycyanatgruppen reaktiven Wasserstoffatomen. Als Verbindungen mit mindestens zwei mit Isocyanatgruppen reaktiven Wasserstoffatomen werden zumeist Polyetheralkohole und/oder Polyesteralkohole eingesetzt. Zumeist werden für derartige Anwendungen Polyetheralkohole eingesetzt, die einen Endblock aus Ethylenoxideinheiten, üblicherweise mit einem Gehalt von 5 bis 25 Gew.-%, bezogen auf das Gewicht des Polyetheralkohols, und 70-90 % primäre Hydroxylgruppen aufweisen, um eine ausreichende Reaktivität des Polyols zu gewährleisten. Typische Hydroxylzahlen derartiger Polyole liegen im Bereich zwischen 25 und 35 mg KOH/g. Die genannten Polyetheralkohole werden üblicherweise durch Anlagerung von Alkylenoxiden an H-funktionelle Startsubstanzen, insbesondere 2- und/oder 3-funktionelle Alkohole hergestellt.

In letzter Zeit werden als Katalysatoren für die Anlagerung von Alkylenoxiden an H-funktionelle Startsubstanzen häufig Multimetallcyanidverbindungen, auch als DMC-Katalysatoren bezeichnet, eingesetzt. Durch den Einsatz von DMC-Katalysatoren können Polyetheralkohole erhalten werden, die sich durch einen verringerten Gehalt an ungesättigten Bestandteilen auszeichnen. Ein weiterer Vorteil beim Einsatz von DMC-Katalysatoren ist die im Vergleich zu basischen Katalysatoren höhere Raum-ZeitAusbeute. Dem stehen jedoch auch Nachteile gegenüber. Ein wesentlicher Nachteil ist die Bildung von sehr hochmolekularen Bestandteilen im Polyol, die sich bei der Verschäumung sehr negativ auswirken. Ein weiterer Nachteil besteht darin, dass nur Propylenoxid und Mischungen aus Propylenoxid und Ethylenoxid gleichmäßig angelagert werden können. Bei der Anlagerung von reinem Ethylenoxid entstehen Produkte mit einer sehr breiten Molgewichtsverteilung. Derartige Polyole sind zumeist trüb, haben eine erhöhte Viskosität, bei der Herstellung der Schäume kommt es zu Verarbeitungsschwierigkeiten, die resultierenden Schäume weisen eine erhöhte Hydrolyseanfälligkeit auf. Daher haben sich mittels DMC-Katalysatoren hergestellte Polyetheralkohole bei der Herstellung von Formschaumstoffen bislang noch nicht durchgesetzt.

Eine Möglichkeit, die Probleme bei der Anlagerung von reinem Ethylenoxid mittels DMC-Katalyse zu umgehen, wird in DE 195 45 895 in Beispiel E und in EP 1 403 301 beschrieben. Dort wird zunächst mittels DMC-Katalyse Propylenoxid, gegebenenfalls im Gemisch mit Ethylenoxid, mittels DMC-Katalyse angelagert, danach ein basischer Katalysator zugesetzt und Ethylenoxid angelagert. Durch dieses Verfahren können Polyetheralkohole mit Endblöcken aus Ethylenoxid hergestellt werden, die zu Block- und Formweichschäumen, insbesondere zu Formweichschäumen weiterverarbeitet werden können. Nachteilig ist jedoch insbesondere, dass der basische Katalysator aufwendig entfernt werden muss, während der DMC-Katalysator im Produkt verbleiben kann.

Aufgabe der vorliegenden Erfindung war es, ein Verfahren zur Herstellung von Polyurethan-Weichschaumstoffen bereitzustellen, bei dem mittels DMC-Katalysatoren hergestellte Polyetheralkohole mit einem endständigen, mittels DMC-Katalyse angelagerten Endblock eingesetzt werden können.

Die Aufgabe konnte überraschenderweise gelöst werden, indem Polyetheralkohole, die einen mittels DMC-Katalyse angelagerten Endblock aus Ethylenoxid-Einheiten von maximal 10 Gew.-%, bezogen auf das Gewicht des mittels DMC-Katalyse angelagerten Alkylenoxids, oder ein Gemisch aus Ethylenoxid und Propylenoxid mit einem Gehalt an Ethylenoxid in der Mischung von mindestens 25 Gew.-%, bezogen auf die Mischung, enthalten, im Gemisch mit mindestens einem Polyetheralkohol, der ausschließlich aus Propylenoxideinheiten besteht, und/oder mindestens einem Graft-Polyetheralkohol eingesetzt werden.

Gegenstand der Erfindung ist demzufolge ein Verfahren zur Herstellung von Polyurethan-Weichschaumstoffen, insbesondere Polyurethan-Formweichschaumstoffen, durch Umsetzung von
a) Polyisocyanaten mit
b) Verbindungen mit mindestens zwei mit Isocyanatgruppen reaktiven Wasserstoffatomen, dadurch gekennzeichnet, dass die Komponente b)
b1a) mindestens einen Polyetheralkohol, der einen mittels DMC-Katalyse angelagerten Endblock aus Ethylenoxid-Einheiten von maximal 10 Gew.-%, bezogen auf das Gewicht des mittels DMC-Katalyse angelagerten Alkylenoxids enthält, und/oder
b1b) mindestens einen Polyetheralkohol, der ein mittels DMC-Katalyse angelagertes endständiges Gemisch aus Ethylenoxid und Propylenoxid mit einem Gehalt an Ethylenoxid in der Mischung von mindestens 25 Gew.-% enthält, sowie
b2a) mindestens einen Polyetheralkohol, der ausschließlich Propylenoxideinheiten enthält, und/oder
b2b) mindestens einen Graft-Polyetheralkohol enthält.

Die Komponente b) enthält somit mindestens einen Bestandteil b1) und mindestens einen Bestandteil b2).

Die Polyetheralkohole b1a) und b1b) haben vorzugsweise eine Funktionalität von 2 bis 4, insbesondere von 2 bis 3, und eine Hydroxylzahl im Bereich zwischen 20 und 70 mg KOH/g, vorzugsweise zwischen 20 und 60 mg KOH/g. Ihr Gehalt an primären Hydroxylgruppen beträgt vorzugsweise mindestens 25 % aller Hydroxylgruppen, insbesondere liegt er zwischen 25 und 65 % aller Hydroxylgruppen. Die Polyetheralkohole b1a) und b1b) weisen vorzugsweise einen Gehalt an Ethylenoxid im Bereich zwischen 5 und 25 Gew.-%, besonders bevorzugt zwischen 8 und 25 Gew.-% und insbesondere zwischen 10 und 20 Gew.-%, bezogen auf das mittels DMC-Katalyse angelagerte Alkylenoxid, auf.

Die Herstellung der Polyetheralkohole b1a) und b1b) erfolgt, wie beschrieben, durch Anlagerung von Alkylenoxiden an H-funktionelle Startsubstanzen unter Verwendung von DMC-Katalysatoren.

Als DMC-Katalysatoren können die allgemein bekannten DMC-Katalysatoren eingesetzt werden. Vorzugsweise kommt Zinkhexacyanocobaltat zum Einsatz.

Als Alkylenoxide werden Ethylenoxid und Propylenoxid eingesetzt. Als Startsubstanzen kommen zwei- und dreifunktionelle Alkohole zum Einsatz. Bespiele hierfür sind Glyzerin, Trimethylolpropan, Ethylenglykol, Propylenglykol, Diethylenglykol, Dipropylenglykol und Butandiol. An Stelle der genannten Alkohole können auch deren Umsetzungsprodukte mit Alkylenoxiden eingesetzt werden. Diese Umsetzungsprodukte haben vorzugsweise ein Molekulargewicht im Bereich zwischen 400 und 1000 g/mol. An die Startsubstanz wird vorzugsweise Propylenoxid oder ein Gemisch aus Propylenoxid und Ethylenoxid angelagert. Dies kann beliebig oft wiederholt werden. Am Kettenende wird bei Komponente b1a) reines Ethylenoxid angelagert. Die Menge des Ethylenoxids am Kettenende beträgt maximal 10 Gew.-%, bezogen auf die Gesamtmenge des mittels DMC-Katalysator angelagerten Alkylenoxids. Bei einem höheren Gehalt kann es zu einer starken Trübung des Polyetheralkohols kommen, derartige Produkte können nicht mehr zu brauchbaren Schaumstoffen verarbeitet werden. Vor dem Ethylenoxid-Endblock kann ein reiner Propylenoxid-Block, vorzugsweise jedoch ein Gemisch aus Ethylenoxid und Propylenoxid angelagert werden.

In einer bevorzugten Ausführungsform der Polyetheralkohole b1a) und b1b) wird zunächst an die Startsubstanz ein Block aus Propylenoxid angelagert, der vorzugsweise eine Menge von 50 bis 80 Gew.-% der gesamten mittels DMC-Katalysator angelagerten Menge an Alkylenoxid umfasst, und daran eine Mischung aus Ethylenoxid und Propylenoxid angelagert. Diese Mischung wird vorzugsweise in der dynamischen Fahrweise angelagert. Dabei wird bei der Herstellung von Polyetheralkoholen b1a) das Verhältnis von Ethylenoxid zu Propylenoxid in der Mischung von 1:5 auf 5:1 geändert. An diesen Block schließt sich bei den Polyetheralkoholen b1a) der reine Ethylenoxid-Endblock an.

Bei den Komponenten b1b) wird am Kettenende eine Mischung aus Ethylenoxid und Propylenoxid mit einem Gehalt an Ethylenoxid in der Mischung von mindestens 25 Gew.-% angelagert. Der Endblock enthält vorzugsweise 10 bis 35 Gew.-% der gesamten mittels DMC-Katalysatoren angelagerten Alkylenoxide.

In einer besonderen Ausführungsform wird bei den Komponenten b1a) und b1b) bei der gemeinsamen Anlagerung von Ethylenoxid und Propylenoxid das Mengenverhältnis der Alkylenoxide untereinander in Verlaufe der Dosierung geändert. Dieses Verfahren wird beispielsweise in WO 01/44347 beschrieben und auch als dynamische Dosierung bezeichnet.

Bevorzugt wird die dynamische Dosierung bei der Herstellung der Komponente b1a) zur Anlagerung eines Gemisches aus Ethylenoxid und Propylenoxid vor der Anlagerung des Ethylenoxid-Endblocks angewandt. Dabei ist es besonders bevorzugt, den Gehalt des Propylenoxids in der Mischung während der Dosierung zu verringern und den Gehalt des Ethylenoxids im Verlaufe der Dosierung zu erhöhen. In einer besonders bevorzugten Ausführungsform wird der Gehalt des Propylenoxids im Verlaufe der Dosierung auf Null abgesenkt, so dass am Ende reines Ethylenoxid in der zur Ausbildung des Endblocks erforderlichen Menge angelagert wird.

Bei der Herstellung der Komponente b1b) wird die dynamische Dosierung vorzugsweise bei der Anlagerung des Endblocks angewandt. Besonders bevorzugt ist es, bei der Dosierung des Endblocks mit einer höheren Menge an Propylenoxid und einer geringeren Menge an Ethylenoxid im Gemisch zu starten und im Verlaufe der Dosierung die Menge des Propylenoxids im Gemisch zu verringern und die des Ethylenoxids im Gemisch zu erhöhen, bis am Ende der Dosierung das gewünschte Verhältnis von Ethylenoxid zu Propylenoxid im Gemisch vorliegt.

Wie bereits gesagt, kann in der Komponente b) mindestens ein Polyetheralkohol b1a), mindestens ein Polyetheralkohol b1b) oder ein Gemisch aus Polyetheralkoholen b1a) und b1b) vorliegen. Dabei enthält die Komponente b) mindestens 5 Gew.-%, vorzugsweise mindestens 10 Gew.-% mindestens eines Polyols b1a) und/oder b1b).

Die Polyetheralkohole b2a), die ausschließlich Propylenoxideinheiten enthalten, werden durch Anlagerung von Propylenoxid an H-funktionelle Startsubstanzen hergestellt.

Die Anlagerung kann durch basische oder DMC-Katalysatoren erfolgen, wobei solche Polyetheralkohole bevorzugt sind, bei denen die Anlagerung mittels DMC-Katalysatoren erfolgt. Die Hydroxylzahl dieser Polyetheralkohole liegt vorzugsweise zwischen 20 und 60 mg KOH/g, die Funktionalität ist 2 bis 4, vorzugsweise 2 bis 3. Als Startsubstanzen werden vorzugsweise die auch zur Herstellung der Komponenten b1a) und b1b) verwendeten Verbindungen eingesetzt. Sie werden insbesondere in einer Menge von 10 bis 30 Gew.-%, bezogen auf die Komponente b), eingesetzt.

Die Herstellung der Polyetheralkohole erfolgt bei den dafür üblichen Bedingungen. Zu Beginn der Umsetzung wird die Startsubstanz vorgelegt und, soweit notwendig, Wasser und andere leicht flüchtige Verbindungen entfernt. Dies erfolgt zumeist durch Destillation, vorzugsweise unter Vakuum. Dabei kann der Katalysator bereits in der Startsubstanz vorhanden sein, es ist jedoch auch möglich, den Katalysator erst nach der Behandlung der Startsubstanz zuzusetzen. Bei der letztgenannten Variante wird der Katalysator thermisch weniger belastet. Vor der Dosierung der Alkylenoxide ist es üblich, den Reaktor zu inertisieren, um unerwünschte Reaktionen der Alkylenoxide mit Sauerstoff zu vermeiden. Danach erfolgt die Dosierung der Alkylenoxide beziehungsweise einer Mischung aus Alkylenoxiden und der Startsubstanz, wobei die Anlagerung in der oben beschriebenen Weise durchgeführt wird. Die Anlagerung der Alkylenoxide erfolgt zumeist bei Drücken im Bereich von 0,01 bar und 10 bar und Temperaturen im Bereich von 50 bis 200 °C, vorzugsweise 90 bis 150 °C. Es hat sich gezeigt, dass die Geschwindigkeit, mit der die Alkylenoxide dosiert werden, ebenfalls einen Einfluss auf die Reaktivität der entstehenden Polyetheralkohole hat. Je schneller die Alkylenoxide dosiert werden, desto höher ist die Reaktivität der resultierenden Polyetheralkohole. Nach der Anlagerung der Alkylenoxide wird zumeist eine Nachreaktionsphase zur vollständigen Umsetzung der Alkylenoxide angeschlossen. Danach werden nicht umgesetzte Monomeren und leichtflüchtige Verbindungen aus der Reaktionsmischung entfernt, üblicherweise mittels Destillation. Der Katalysator kann üblicherweise im Polyetheralkohol verbleiben, es ist jedoch prinzipiell möglich, ihn ganz oder teilweise zu entfernen, beispielsweise mittels Filtration. Der fertige Polyetheralkohol wird üblicherweise gegen thermooxidativen Abbau stabilisiert, zumeist durch Zusatz von Antioxidantien, wie sterisch gehinderten Aminen oder Phenolen.

Die zur Herstellung der Polyetheralkohole eingesetzten DMC-Katalysatoren sind bekannt und beispielsweise in EP-A 1 053 787, oder in EP-A 0 755 716 beschrieben.

Bei den Graft-Polyolen handelt es sich um Dispersionen von Polymerisaten in Polyetheralkoholen. Derartige Polyole werden durch in-situ Polymerisation von ethylenisch ungesättigten Monomeren, insbesondere Styrol und/oder Acrylnitril, in Trägerpolyolen, vorzugsweise Polyetheralkoholen, hergestellt. Die Polymerisation erfolgt üblicherweise in Anwesenheit von Initiatoren, Polymerisationsreglern und Polyolen mit eingebauten ethylenisch ungesättigten Bindungen, häufig auch als Makromere bezeichnet. Derartige Polyole sind seit langem bekannt und beispielsweise in WO 03/78496 beschrieben. Die für das erfindungsgemäße Verfahren bevorzugten Graft-Polyole haben eine Hydroxylzahl im Bereich zwischen 10 und 50 mg KOH/g, eine Funktionalität von 2 bis 3 und einen Gehalt an Feststoffen von 35 bis 50 Gew.-%.

Ihr Einsatz erfolgt vorzugsweise in einer Menge von 5 bis 25 Gew.-%, besonders bevorzugt 8 bis 15 Gew.-%. Bei geringeren Mengen sind die Effekte zu schwach, bei höheren Mengen steigt die Viskosität der Komponente b) zu stark an.

Zur Herstellung der Polyurethan-Weichschaumstoffe werden die beschriebenen Polyetheralkohole mit Polyisocyanaten umgesetzt. Zu den hierfür verwendeten Ausgangsstoffen ist im einzelnen folgendes zu sagen.

Als Polyisocyanate a) kommen hierbei alle Isocyanate mit zwei oder mehreren Isocyanatgruppen im Molekül zum Einsatz. Dabei können sowohl aliphatische Isocyanate, wie Hexamethylendiisocyanat (HDI) oder Isophorondiisocyanat (IPDI), oder vorzugsweise aromatische Isocyanate, wie Toluylendiisocyanat (TDI), Diphenylmethandiisocyanat (MDI) oder Mischungen aus Diphenylmethandiisocyanat und Polymethylenpolyphenylenpolyisocyanaten (Roh-MDI) verwendet werden. Es ist auch möglich, Isocyanate einzusetzen, die durch den Einbau von Urethan-, Uretdion-, Isocyanurat-, Allophanat-, Uretonimin- und anderen Gruppen modifiziert wurden, sogenannte modifizierte Isocyanate.

Für die Herstellung von Blockweichschaumstoffen wird insbesondere TDI eingesetzt, während bei der bevorzugten Herstellung von Formschäumen vorzugsweise MDI und seine höheren Homologen eingesetzt werden.

Als Verbindungen mit mindestens zwei mit Isocyanatgruppen reaktiven Gruppen, die im Gemisch mit den Polyetheralkoholen b1) eingesetzt werden, können vorzugsweise Polyole verwendet werden. Unter den Polyolen haben die Polyetherpolyole und die Polyesterpolyole die größte technische Bedeutung. Die zur Herstellung von Polyurethanen eingesetzten Polyetherpolyole werden zumeist durch basisch katalysierte Anlagerung von Alkylenoxiden, insbesondere Ethylenoxid und/oder Propylenoxid, an H-funktionelle Startsubstanzen hergestellt. Polyesterpolyole werden zumeist durch Veresterung von mehrfunktionellen Carbonsäuren mit mehrfunktionellen Alkoholen hergestellt. Die eingesetzten Polyole weisen vorzugsweise eine Hydroxylzahl im Bereich zwischen 20 und 100 mg KOH/g und eine Funktionalität im Bereich zwischen 2 und 4 auf.

In einer bevorzugten Ausführungsform des erfindungsgemäßen Verfahrens wird im Gemisch mit den erfindungsgemäße eingesetzten Polyetheralkoholen mindestens ein mittels DMC-Katalysator hergestellter Polyetheralkohol mit einer Hydroxylzahl im Bereich von 20 bis 40 mg KOH/g, einem Gehalt an Ethylenoxid im Bereich von 5 bis 20 Gew.-%, bezogen auf das Gesamtgewicht des Polyetheralkohols, und einem Endblock aus Ethylenoxid und Propylenoxid mit einem Gehalt an Ethylenoxid von 25 bis 75 Gew.-%, bezogen auf die Menge des Alkylenoxids im Endblock, eingesetzt wird.

Zu den Verbindungen mit mindestens zwei mit Isocyanatgruppen reaktiven Gruppen gehören auch die Kettenverlängerer und/oder Vernetzer, die gegebenenfalls mit eingesetzt werden können. Dabei handelt es sich um mindestens zweifunktionelle Amine und/oder Alkohole mit Molekulargewichten im Bereich von 60 bis 400.

Als Treibmittel werden zumeist Wasser, bei der Reaktionstemperatur der Urethanreaktion gasförmige, gegenüber den Ausgangsstoffen der Polyurethane inerte Verbindungen, sogenannte physikalisch wirkende Treibmittel, sowie Gemische daraus eingesetzt. Als physikalisch wirkende Treibmittel werden zumeist Kohlenwasserstoffe mit 2 bis 6 Kohlenstoffatomen, halogenierte Kohlenwasserstoffe mit 2 bis 6 Kohlenstoffatomen, Ketone, Acetale, Ether, Inertgase wie Kohlendioxid oder Edelgase eingesetzt.

Als Katalysatoren werden vorzugsweise Aminverbindungen und/oder Metallverbindungen, insbesondere Schwermetallsalze und/oder metallorganische Verbindungen, eingesetzt. Insbesondere werden als Katalysatoren bekannte tertiäre Amine und/oder mit organische Metallverbindungen verwendet. Als organische Metallverbindungen kommen z.B. Zinnverbindungen in Frage, wie beispielsweise Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutyl-zinndiacetat, Dibutylzinndilaurat, Dibutylzinn-maleat und Dioctylzinn-diacetat. Als für diesen Zweck übliche organische Amine seien beispielhaft genannt: Triethylamin, 1,4-Diazabicyclo-[2,2,2]-octan, Tributylamin, Dimethylbenzylamin, N,N,N',N'-Tetramethylethylendiamin, N,N,N',N'-Tetramethyl-butandiamin, N,N,N',N'-Tetramethylhexan-1,6-diamin, Dimethylcyclohexylamin. Die beschriebenen Katalysatoren können einzeln oder in Form von Mischungen eingesetzt werden.

Für das erfindungsgemäße Verfahren ist es bevorzugt, organische Metallverbindungen als Katalysatoren einzusetzen, da diese mit den Multimetallcyanidverbindungen am besten verträglich sind.

Als Hilfsmittel und/oder Zusatzstoffe werden beispielsweise Trennmittel, Flammschutzmittel, Farbstoffe, Füllstoffe und/oder Verstärkungsmittel verwendet.

In der Technik ist es üblich, alle Einsatzstoffe mit Ausnahme der Polyisocyanate zu einer sogenannten Polyolkomponente zu vermischen und diese mit den Polyisocyanaten zum Polyurethan umzusetzen.

Die Herstellung der Polyurethane kann nach dem sogenannten one-shot-Verfahren oder nach dem Prepolymerverfahren erfolgen.

Eine Übersicht über die Einsatzstoffe für die Herstellung von Polyurethanen sowie die dazu angewendeten Verfahren findet sich beispielsweise im Kunststoffhandbuch, Band 7 "Polyurethane", Carl-Hanser-Verlag München Wien, 1. Auflage 1966, 2. Auflage 1983 und 3. Auflage 1993.

Die nach dem erfindungsgemäßen Verfahren hergestellten Schaumstoffe zeichnen sich durch sehr gute Verarbeitungseigenschaften und gute mechanische Eigenschaften aus. Die zu ihrer Herstellung eingesetzten Polyetheralkohole sind günstig herstellbar und mit den übrigen Bestandteilen der Polyolkomponente gut verträglich.

Die Erfindung soll an den nachfolgenden Beispielen näher erläutert werden.

**Tabelle 1 - Eingesetzte Polyetheralkohole**

| Polyether | A | B | C | D | E | F |
|---|---|---|---|---|---|---|
| Katalysatormenge [ppm] | 100 | 100 - | 100 | 125 | 100 | 100 |
| Startsubstanz* | VP900 | VP900 | VP900 | VP900 | VP900 | VP900 |
| Startsubstanz [kg] | 1,83 | 1,83 | 2,93 | 2,1 | 1,65 | 1,65 |
| PO [kg] | 3,93 | 3,45 | 3,07 | 17,9 | 4,11 | 5,03 |
| PO/EO-Gemisch dynamisch [kg] | 2,24 | 2,24 | 1,6 | - | 2,24 | 1,22 |
| davon EO [kg] | 1,12 | 1,12 | 0,8 | - | 1,12 | 1,12 |
| Dosierrate PO Beginn [kg/h] | 1,0 | 1,0 | 1,0 | - | 1,0 | 0,6 |
| Dosierrate PO Ende [kg/h] | 0,2 | 0,2 | 0,2 | - | 0,2 | 0,1 |
| Dosierrate EO Beginn [kg/h] | 0,2 | 0,2 | 0,2 | - | 0,2 | 0,6 |
| Dosierrate EO Ende [kg/h] | 1,0 | 1,0 | 1,0 | - | 1,0 | 3,4 |
| | | | | | | |
| Endblock EO [kg] | 0 | 0,48 | 0,4 | - | 0 | 0 |
| Dosierrate [kg/h] | 0 | 1 | 1 | - | 0 | 0 |
| Kennwerte | | | | | | |
| 1° OH [%] ** | 34 | 55 | 46 | 0 | 39 | 32 |
| OHZ [mg KOH/g] | 34,1 | 35,0 | 54,5 | 42 | 32,3 | 28,2 |
| Viskosität bei 25 °C [mPas] | 895 | 890 | 542 | 797 | 919 | 1150 |
| M_{w} [g/mol] | 3938 | 2993 | 2708 | 3420 | 3885 | 3989 |

| | | | | | | |
|---|---|---|---|---|---|---|
| EO - Ethylenoxid PO - Propylenoxid * Vorpolymer, hergestellt durch Propoxylierung eines Gemisches von Glyzerin und Monoethylenglykol im Molverhältnis von Glyzerin zu Monoethylenglykol von 3:1, mit einer Hydroxylzahl 168 mgKOH/g ** Gehalt an primären Hydroxylgruppen aus Ethylenoxid, bezogen auf den Gesamtgehalt an Hydroxylgruppen | | | | | | |

### Herstellung der Polyetheralkohole - Allgemeine Vorschrift

Die Synthese wurde in einem gereinigten und getrockneten 10 l-Rührautoklaven durchgeführt. Es wurden die in Tabelle 1 angegebenen Mengen an Vorpolymer in den Rührkessel gegeben und mit der angegebenen Menge einer Multimetallcyanidverbindung, hergestellt aus Zinkacetat und Hexacyanocobaltsäure im Beisein eines oberflächenaktiven Mittels, versetzt. Der Kesselinhalt wurde mit Stickstoff inertisiert und insgesamt 1 Stunde bei 120°C im Vakuum behandelt. Bei 120°C wurde mit den in der Tabelle angegebenen Dosierraten die angegebenen Mengen an Alkylenoxiden dosiert. Nach Abschluss der Dosierung wurde nachgerührt bis zur Druckkonstanz und danach die Reaktionsmischung bei 105°C und 10 mbar entgast.

Die Kennwerte der resultierenden Polyetheralkohole sind ebenfalls der Tabelle zu entnehmen.

Die Bestimmung der Kennwerte erfolgte nach folgenden Methoden:

Die Bestimmung des Gehalts an primären Hydroxylgruppen aus Ethylenoxid und Propylenoxid erfolgte durch Derivatisierung der Hydroxylgruppen des Polyetheralkohols mit Trichloracetylisocyanat und nachfolgende Messung mit einem NMR-Spektrometer BRUKER DPX 250 mit z-shielded inversem Probenkopf 5 mm. Dabei haben die primären Hydroxylgruppen aus Ethylenoxid, die primären Hydroxylgruppen aus Propylenoxid und die sekundären Hydroxylgruppen unterschiedliche Peaks.
Die Bestimmung der Viskosität, angegeben in mPas, erfolgte bei 25°C nach DIN 51562.

### Herstellung der Schaumstoffe

### Beispiel 1

Aus 75,50 Gew.-Teilen Polyol A, 10 Gew.-Teilen Polyol B, 10 Gewichtsteilen eines Graft-Polyols mit einer Hydroxylzahl von 20 mgKOH/g und einem Feststoffgehalt von 43,5 Gew.-%, hergestellt durch in situ Polymerisation von gleichen Gewichtsteilen Styrol und Acrylnitril (Lupranol^{®} L 4800 der BASF AG), 0,20 Gew.-Teilen Katalysator N 206 der BASF AG, 0,40 Gew.-Teilen Katalysator N 201 der BASF AG, 0,15 Gew.-Teilen Katalysator TMHDA der Huntsman, 0,10 Gew.-Teilen Schaumstabilisator Tegostab^{®} B 8680 der Goldschmidt AG und 3,65 Gew.-Teilen Wasser wurde durch Rühren eine Polyolkomponente hergestellt. Diese wurde mit einem Prepolymer auf Basis von monomerem und polymerem Diphenylmethandiisocyanat und di-und trifunktionellen Poly(oxyalkylen)polyolen mit einem NCO-Gehalt 27 Gew.-% bei einem Index von 100 vermischt und in eine mit Trennmittel versehene und auf 40°C vorgewärmte Form mit einem Inhalt von 14,5 l überführt. Nach 10 min konnte das Weichschaumteil problemlos entformt werden. Die mechanische Prüfung ergab bei einer Rohdichte von 42 kg/m³ (DIN 53420), eine Stauchhärte von 5,4 kPa (DIN 53577), eine Zugfestigkeit lag bei 135 kPa (DIN 53571) und eine Dehnung bei 105 % (DIN 53571).

### Beispiel 2

Aus 55,00 Gew.-Teilen Polyol B, 18 Gew.-Teilen Polyol D, 21 Gew.-Teilen Polyol F, 0,15 Gew.-Teilen Katalysator N 206 der BASF AG, 0,20 Gew.-Teilen Katalysator N 201 der BASF AG, 2,50 Gew.-Teilen Schaumstabilisator Tegostab^{®} B 8680 der Goldschmidt AG und 3,15 Gew.-Teilen Wasser wurde durch Rühren eine Polyolkomponente hergestellt. Diese wurde mit einem Prepolymer auf Basis von monomerem und polymerem Diphenylmethandiisocyanat und einem trifunktionellen Poly(oxyalkylen)polyol mit einem NCO-Gehalt 28 Gew.-% bei einem Index von 95 vermischt und in die mit Trennmittel versehene und auf 45°C vorgewärmte Form überführt. Der entstandene viskoelastische Schaum hatte einen latexartigen Griff.

## Patentansprüche

1. Verfahren zur Herstellung von Polyurethan-Weichschaumstoffen, insbesondere Polyurethan-Formweichschaumstoffen, durch Umsetzung von
a) Polyisocyanaten mit
b) Verbindungen mit mindestens zwei mit Isocyanatgruppen reaktiven Wasserstoffatomen, **dadurch gekennzeichnet, dass** die Komponente b)
b1a) mindestens einen Polyetheralkohol, der einen mittels DMC-Katalyse angelagerten Endblock aus Ethylenoxid-Einheiten von maximal 10 Gew.-%, bezogen auf das Gewicht des mittels DMC-Katalyse angelagerten Alkylenoxids enthält, und/oder
b1b) mindestens einen Polyetheralkohol, der ein mittels DMC-Katalyse angelagertes endständiges Gemisch aus Ethylenoxid und Propylenoxid mit einem Gehalt an Ethylenoxid in der Mischung von mindestens 25 Gew.-% enthält, sowie
b2a) mindestens einen Polyetheralkohol, der ausschließlich Propylenoxideinheiten enthält, und/oder
b2b) mindestens einen Graft-Polyetheralkohol enthält.

2. Verfahren nach Anspruch 1, **dadurch gekennzeichnet, dass** die Polyetheralkohole b1a) und b1b) eine Funktionalität von 2 bis 4 aufweisen.

3. Verfahren nach Anspruch 1, **dadurch gekennzeichnet, dass** die Polyetheralkohole b1a) und b1b) eine Funktionalität von 2 bis 3 aufweisen.

4. Verfahren nach Anspruch 1, **dadurch gekennzeichnet, dass** die Polyetheralkohole b1a) und b1b) eine Hydroxylzahl im Bereich zwischen 20 und 70 mg KOH/g aufweisen.

5. Verfahren nach Anspruch 1, **dadurch gekennzeichnet, dass** die Polyetheralkohole b1a) und b1b) eine Hydroxylzahl im Bereich zwischen 20 und 60 mg KOH/g aufweisen.

6. Verfahren nach Anspruch 1, **dadurch gekennzeichnet, dass** die Polyetheralkohole b1a) und b1b) Gehalt an Ethylenoxid im Bereich zwischen 5 und 25 Gew.-%, bezogen auf das mittels DMC-Katalyse angelagerte Alkylenoxid, aufweisen.

7. Verfahren nach Anspruch 1, **dadurch gekennzeichnet, dass** die Polyetheralkohole b1a) und b1b) Gehalt an Ethylenoxid im Bereich zwischen 8 und 25 Gew.-%, bezogen auf das mittels DMC-Katalyse angelagerte Alkylenoxid, aufweisen.

8. Verfahren nach Anspruch 1, **dadurch gekennzeichnet, dass** die Polyetheralkohole b1a) und b1b) Gehalt an Ethylenoxid im Bereich zwischen 10 und 20 Gew.-%, bezogen auf das mittels DMC-Katalyse angelagerte Alkylenoxid, aufweisen.

9. Verfahren nach Anspruch 1, **dadurch gekennzeichnet, dass** die Polyetheralkohole b1a) eine Menge des Ethylenoxids am Kettenende von maximal 10 Gew.-%, bezogen auf die Gesamtmenge des mittels DMC-Katalysator angelagerten Alkylenoxids, aufweisen.

10. Verfahren nach Anspruch 1, **dadurch gekennzeichnet, dass** die Komponente b) mindestens 5 Gew.-% mindestens eines Polyols b1a) und/oder b1b) enthält.

11. Verfahren nach Anspruch 1, **dadurch gekennzeichnet, dass** die Komponente b) mindestens 10 Gew.-% mindestens eines Polyols b1a) und/oder b1b) enthält.

12. Verfahren nach Anspruch 1, **dadurch gekennzeichnet, dass** die Komponente b) 10 bis 25 Gew.-%, bezogen auf die Komponente b), des Polyetheralkohols b2a) enthält.

13. Verfahren nach Anspruch 1, **dadurch gekennzeichnet, dass** die Komponente b) Graft-Polyole b2b) in einer Menge von 5 bis 25 Gew.-%, bezogen auf die Komponente b), enthält.

14. Verfahren nach Anspruch 1, **dadurch gekennzeichnet, dass** die Komponente b) Graft-Polyole b2b) in einer Menge von 8 bis 15 Gew.-%, bezogen auf die Komponente b), enthält.

15. Polyetheralkohol, herstellbar durch Anlagerung von Ethylenoxid und Propylenoxid an H-funktionelle Startsubstanzen, der einen mittels DMC-Katalyse angelagerten Endblock aus Ethylenoxid Einheiten von maximal 10 Gew.-%, bezogen auf das Gewicht des mittels DMC-Katalyse angelagerten Alkylenoxids enthält, wobei an die Startsubstanz ein Block aus Propylenoxid angelagert, daran eine Mischung aus Ethylenoxid und Propylenoxid und daran Ethylenoxid angelagert wird.

16. Polyetheralkohol nach Anspruch 15, **dadurch gekennzeichnet, dass** bei der Anlagerung der Mischung aus Ethylenoxid und Propylenoxid das Mengenverhältnis der Alkylenoxide untereinander in Verlaufe der Dosierung geändert wird.

## Claims

1. A process for producing flexible polyurethane foams, in particular molded flexible polyurethane foams, by reacting
a) polyisocyanates with
b) compounds having at least two hydrogen atoms which are reactive toward isocyanate groups, wherein the component b) comprises
b1a) at least one polyether alcohol having an end block of ethylene oxide units which has been added on by means of DMC catalysis and makes up not more than 10% by weight of the weight of the alkylene oxide added on by means of DMC catalysis, and/or
b1b) at least one polyether alcohol comprising a terminal mixture of ethylene oxide and propylene oxide which has been added on by means of DOC catalysis and has an ethylene oxide content in the mixture of at least 25% by weight, and also
b2a) at least one polyether alcohol comprising exclusively propylene oxide units, and/or
b2b) at least one graft polyether alcohol.

2. The process according to claim 1, wherein the polyether alcohols b1a) and b1b) have a functionality of from 2 to 4.

3. The process according to claim 1, wherein the polyether alcohols b1a) and b1b) have a functionality of from 2 to 3.

4. The process according to claim 1, wherein the polyether alcohols b1a) and b1b) have a hydroxyl number in the range from 20 to 70 mg KOH/g.

5. The process according to claim 1, wherein the polyether alcohols b1a) and b1b) have a hydroxyl number in the range from 20 to 60 mg KOH/g.

6. The process according to claim 1, wherein the polyether alcohols b1a) and b1b) have an ethylene oxide content in the range from 5 to 25% by weight, based on the alkylene oxide added on by means of DMC catalysis.

7. The process according to claim 1, wherein the polyether alcohols b1a) and b1b) have an ethylene oxide content in the range from 8 to 25% by weight, based on the alkylene oxide added on by means of DMC catalysis.

8. The process according to claim 1, wherein the polyether alcohols b1a) and b1b) have an ethylene oxide content in the range from 10 to 20% by weight, based on the alkylene oxide added on by means of DMC catalysis.

9. The process according to claim 1, wherein the polyether alcohols b1a) have an amount of ethylene oxide at the end of the chain of not more than 10% by weight, based on the total amount of alkylene oxide added on by means of DMC catalysis.

10. The process according to claim 1, wherein the component b) comprises at least 5% by weight of at least one polyol b1a) and/or b1b).

11. The process according to claim 1, wherein the component b) comprises at least 10% by weight of at least one polyol b1a) and/or b1b).

12. The process according to claim 1, wherein the component b) comprises from 10 to 25% by weight, based on the component b), of the polyether alcohol b2a),

13. The process according to claim 1, wherein the component b) comprises graft polyols b2b) in an amount of from 5 to 25% by weight, based on the component b).

14. The process according to claim 1, wherein the component b) comprises graft polyols b2b) in an amount of from 8 to 15% by weight, based on the component b).

15. A polyether alcohol which can be prepared by addition of ethylene oxide and propylene oxide onto H-functional starter substances and has an end block of ethylene oxide units which has been added on by means of DMC catalysis and makes up not more than 10% by weight of the weight of the alkylene oxide added on by means of DMC catalysis, wherein a block of propylene oxide is added onto the starter substance, a mixture of ethylene oxide and propylene oxide is added onto this and ethylene oxide is added onto this.

16. The polyether alcohol according to claim 15, wherein, during the molecular addition of the mixture of ethylene oxide and propylene oxide, the ratio of the alkylene oxides is altered during the course of the metered addition.

## Revendications

1. Procédé de préparation de mousses de polyuréthanne souples, en particulier de mousses de polyuréthanne souples à mouler, par réaction de :
a) polyisocyanates avec
b) des composés comportant au moins deux atomes d'hydrogène réactifs avec des groupes isocyanate, **caractérisé en ce que** le composant b) contient:
b1a) au moins un polyétheralcool qui contient un bloc terminal d'unités d'oxyde d'éthylène ajouté par catalyse au DMC d'un maximum de 10 % en poids, par rapport au poids de l'oxyde d'alkylène ajouté par catalyse au DMC, et/ou
b1b) au moins un polyétheralcool qui contient, en position terminale, un mélange d'oxyde d'éthylène et d'oxyde de propylène ajouté par catalyse au DMC d'une teneur en oxyde d'éthylène dans le mélange d'au moins 25 % en poids, ainsi que
b2a) au moins un polyétheralcool contenant exclusivement des unités d'oxyde de propylène, et/ou
b2b) au moins un polyétheralcool greffé.

2. Procédé suivant la revendication 1, **caractérisé en ce que** les polyétheralcools b1a) et b1b) présentent une fonctionnalité de 2 à 4.

3. Procédé suivant la revendication 1, **caractérisé en ce que** les polyétheralcools b1a) et b1b) présentent une fonctionnalité de 2 à 3.

4. Procédé suivant la revendication 1, **caractérisé en ce que** les polyétheralcools b1a) et b1b) présentent un indice hydroxyle de l'ordre de 20 à 70 mg de KOH/g.

5. Procédé suivant la revendication 1, **caractérisé en ce que** les polyétheralcools b1a) et b1b) présentent un indice hydroxyle de l'ordre de 20 à 60 mg de KOH/g.

6. Procédé suivant la revendication 1, **caractérisé en ce que** les polyétheralcools b1a) et b1b) présentent une teneur en oxyde d'éthylène de l'ordre de 5 à 25 % en poids, par rapport à l'oxyde d'alkylène ajouté par catalyse au DMC.

7. Procédé suivant la revendication 1, **caractérisé en ce que** les polyétheralcools b1a) et b1b) présentent une teneur en oxyde d'éthylène de l'ordre de 8 à 25 % en poids, par rapport à l'oxyde d'alkylène ajouté par catalyse au DMC.

8. Procédé suivant la revendication 1, **caractérisé en ce que** les polyétheralcools b1a) et b1b) présentent une teneur en oxyde d'éthylène de l'ordre de 10 à 20 % en poids, par rapport à l'oxyde d'alkylène ajouté par catalyse au DMC.

9. Procédé suivant la revendication 1, **caractérisé en ce que** les polyétheralcools b1a) présentent une quanti té d'oxyde d'éthylène en bout de chaîne d'un maximum de 10 % en poids, par rapport à la quantité totale de l'oxyde d'alkylène ajouté par catalyse au DMC.

10. Procédé suivant la revendication 1, **caractérisé en ce que** le composant b) contient au moins 5 % en poids d'au moins un polyol b1a) et/ou b1b).

11. Procédé suivant la revendication 1, **caractérisé en ce que** le composant b) contient au moins 10 % en poids d'au moins un polyol b1a) et/ou b1b).

12. Procédé suivant la revendication 1, **caractérisé en ce que** le composant b) contient de 10 à 25 % en poids, par rapport au composant b), du polyétheralcool b2a).

13. Procédé suivant la revendication 1, **caractérisé en ce que** le composant b) contient des polyols greffés b2b) en une quantité de 5 à 25 % en poids, par rapport au composant b).

14. Procédé suivant la revendication 1, **caractérisé en ce que** le composant b) contient des polyols greffés b2b) en une quantité de 8 à 15 % en poids, par rapport au composant b).

15. Polyétheralcool, qui peut être préparé par addition d'oxyde d'éthylène et d'oxyde de propylène sur des substances de départ à fonctionnalité H, contenant un bloc terminal d'unités d'oxyde d'éthylène ajouté par catalyse au DMC et d'un maximum de 10 % en poids, par rapport au poids de l'oxyde d'alkylène ajouté par catalyse au DMC, un bloc d'oxyde de propylène étant ajouté sur la substance de départ, puis un mélange d'oxyde d'éthylène et d'oxyde de propylène et ensuite de l'oxyde d'éthylène.

16. Polyétheralcool suivant la revendication 15, **caractérisé en ce que,** lors de l'addition du mélange d'oxyde d'éthylène et d'oxyde de propylène, la proportion quantitative mutuelle des oxydes d'alkylène est modifiée au cours de l'addition dosée.
